# EUROPEAN PATENT APPLICATION

(11) **EP 2 090 867 A1**
(43) Date of publication of application: **19.08.2009**
(21) Application number: 06834025.6
(22) Date of filing: 05.12.2006
(51) Int. Cl.: G01C 21/00, G08G 1/005

(54) **NAVIGATION SYSTEM, PORTABLE TERMINAL DEVICE, AND PERIPHERAL-IMAGE DISPLAY METHOD**

(71) Applicant: Navitime Japan Co., Ltd., Tokyo 107-0062 (JP)
(72) Inventor: SAKAMOTO, Hiroshi, Minato-ku, Tokyo 1070062 (JP)
(74) Representative: Wiedemann, Peter
(86) International application number: PCT/JP2006/324270
(87) International publication number: WO 2008/068849

(57) **Abstract**

A navigation system constructed from a portable terminal device having a route search server provided with route search means for searching for a guidance route from a start point up to a destination; GPS receiving means for positioning a current position; imaging means; and display means for displaying, along with a peripheral image captured by the imaging means, a guidance route, a guidance image in the direction of advance, or an image representing a place of interest. The portable terminal device further has display control means for controlling display of the peripheral image displayed on the display means. The display control means controls the position of display of the peripheral image, captured by the imaging means, so that the center of optical axis of the imaging means is below the center of the display screen. Even if the direction of the optical axis of the imaging means is directed downward from a horizontal line, the horizontal direction of the peripheral image is displayed on the display screen.

## Description

### TECHNICAL FIELD

The present invention relates to a communication-type pedestrian navigation system for searching for a guidance route from a start point up to a destination, and using image information displayed on display means of a portable terminal device for guidance along the route. The present invention relates in particular to a communication-type pedestrian navigation system for imaging a peripheral scene in intersections or other such locations using imaging means of the portable terminal device; for displaying the captured image on display means as a peripheral image; and, in a case where the portable terminal device is held in a position suitable for the user to view a display screen thereof when a route guide image, a guidance image in a direction of advance, or another image is to be displayed on top of the displayed peripheral image, for displaying a horizontal direction of the peripheral image on the display screen even if a direction of an optical axis of the imaging means is directed downward from a horizontal line.

### BACKGROUND ART

In the past, when traveling to a destination in an unfamiliar place, a traveler followed an atlas or the like and arrived at the destination by identifying a transport facility, a road, a landmark, or an address shown in the map. In an automobile equipped with a navigation system (hereinafter referred to as a car navigation system), a traveler reaches a destination while receiving guidance displayed on a monitor screen or voice guidance (navigation information) from the navigation system by activating the car navigation system and inputting the destination.

The car navigation system described above uses a GPS (Global Positioning System) in which GPS signals transmitted from a plurality of GPS satellites orbiting the earth are received by a GPS antenna, and a position is determined by analyzing satellite positions, time information, and the like that are included in the GPS signals. At least four or more of the plurality of GPS satellites are needed to determine a position. The accuracy of independent positioning in a GPS in general is a little over 10 m, but the accuracy is enhanced to 5 m or less through the use of a DGPS (Differential GPS). A trend in all models of so-called third-generation mobile telephones is the installation of GPS receivers that are currently installed only in some mobile telephones.

Techniques in various fields have been proposed for utilizing a mobile terminal that has this type of positioning capability. For example, a proposal has been made for the evolution of an automobile navigation device (car navigation system) into a communication-type navigation system used by a walker, in which map/route information is delivered from an information delivery server (route search server) using a mobile telephone as a terminal.

The performance of mobile telephones, PHS, and other mobile communication terminal devices has improved dramatically in recent years, and these devices are being provided with multifunction capability. Besides voice communication capability, data communication capability in particular is being emphasized, and various types of data communication services are provided to users over the Internet. A navigation service is one of these services, and a communication-type navigation system has been implemented for providing route guidance from a current position to a destination to not only the driver of an automobile, but also the user of a mobile telephone.

An example of the route search device and route search method used in a typical navigation device and communication navigation system is disclosed in Patent Document 1 (Japanese Laid-open Patent Application No. 2001-165681) below. In this navigation system, information relating to the departure point and the destination is transmitted from a mobile navigation terminal to an information delivery server, the information delivery server searches a route that matches search conditions from road network or transportation network data, and guidance is provided. The search conditions include the means of travel from the departure point to the destination, examples of which include walking, an automobile, a railroad, a combination of railroad and walking, and the like.

The route search is performed using this factor as one search condition. The information delivery server is provided with a database of cost information (distance or required time) for all links, wherein the links are routes that connect nodes, and nodes are the positions of junctions and turns in roads (routes) in the map data. The information delivery server can guide the mobile navigation terminal along the shortest route by referring to the database, sequentially searching the links that lead from the departure point node to the destination node, and creating a guide route by tracing nodes and links for which the cost information of the link indicates the smallest cost. A technique known as a label setting algorithm or a Dijkstra algorithm is used as the technique for performing this type of route search. In Patent Document 1 mentioned above, a route search method that uses this Dijkstra algorithm is also disclosed.

In a typical communication-type navigation system, the map information or guide route information displayed by the terminal device is downloaded from a route search server or other server device connected to the terminal device via a network. The terminal device to which the map information or guide route is delivered from the route search server or other information delivery server is provided with a liquid crystal display device or other display means, the map and guide route are displayed in the display means as well as the current position (current position of the terminal device) of the walker or automobile on the guide route, and the walker or automobile is guided to the destination.

The map displayed in the display means is typically a plan view, i.e., a two-dimensional map display, but methods have been proposed for displaying a planar aerial map that brings a sense of perspective to the display image, or an aerial map in which buildings are simulated in three dimensions in order to make landmarks or buildings easier to recognize, or for displaying roads or buildings as three-dimensional polygon images by a Z buffer method.

For example, Patent Document 2 (Japanese Laid-open Patent Application No. 2001-27535) discloses a map display device in which buildings or roads are displayed in three dimensions. In the map display device disclose in Patent Document 2, shading is added to an image of the route guide line on an image of a road to create a three-dimensional map display. When a positional relationship occurs in which the route guide line is hidden by a building, the overlapped portion and the non-overlapped portion of the route guide line are displayed in different colors. In particular, the display color of the route guide line and the display color of buildings are drawn by a semi-transparency method of setting mutually different colors in the pixel units in VRAM (video RAM), and the relative positioning of buildings and the route guide line is clarified to enhance the visibility of the route guide line.

In order to create a display such as described above, building shape data and height information are stored in the map data in the map display device disclosed in Patent Document 2, and multi-level crossings and other road shape data are also stored. Based on this map data, buildings or multi-level road crossings are drawn in three dimensions in a drawing unit, and when the vehicle arrives at a position for which route guidance is to be provided, the desired image is drawn in the drawing unit, a predetermined sound is outputted by a voice output unit, and the user is guided to the destination.

A map is generally displayed in three dimensions using polygon data in the following manner. Specifically, the surfaces that form each building to be displayed in the map are prepared as polygon data, and the building polygon data are transmitted together with the map data to the map display device. The map display device displays the map and displays each building positions on the map in three dimensions using the polygon data. At this time, textures are applied to the surfaces of the buildings and displayed in order to more realistically display the buildings. The textures are data for showing patterns on the surfaces of the buildings, and include the shapes of windows in the buildings, wall designs, and the like.

For example, Patent Document 3 (Japanese Laid-open Patent Application No. 2000-259861) below discloses a texture mapping device whereby textures are applied to polygon data and drawn. The invention disclosed in Patent Document 3 accurately and efficiently applies textures to polygons and facilitates subsequent editing. This texture mapping device designates square polygons P1 through P4 arranged in M lines and N columns on a wire frame, and textures applied thereto. The textures to be applied are divided according to the ratio of the edge lengths Lp1 through Lp12 of the designated plurality of polygons P1 through P4. A configuration is adopted in which the orientation of the polygons is taken into account to apply the divided textures to the corresponding polygons.

When buildings are displayed in three dimensions using polygon data and texture data in this manner, the polygon data indicating the surfaces of the buildings, and the texture data to be applied to the surfaces have a one-to-one correspondence, the texture data are accumulated in the server database along with the polygon data, and the polygon data and texture data of the buildings to be displayed on the map are transmitted to the map display device together with a predetermined range of map data.

According to such a method for creating a three-dimensional map display, since the user of the terminal device can see a display image that approximates the scenery actually being observed, advantages are gained in that the user can easily recognize the locations of right or left turns and the direction of travel. In order to obtain this advantage, however, map data for three-dimensional display separate from the plan-view map data are necessary in order to display the map in three dimensions. Three-dimensional map data include more data than plan-view map data, and a large-capacity storage device is needed as the storage device for storing the map data. In a communication-type navigation system, the communication load between the terminal device and the route search server is also large, and there are also long communication times. Therefore, various problems arise such as the need for processing performance in the route search server sufficient to provide service to numerous terminal devices.

In order to overcome such problems, navigation devices have been proposed in Patent Document 4 (Japanese Laid-open Patent Application No. 2004-257979) and Patent Document 5 (Japanese Laid-open Patent Application No. 2006-162442), in which an image of a scene in the forward direction is captured using a CCD camera or other imaging means, the captured peripheral image is displayed on a display screen, a forward direction guidance image of a right turn or a left turn is displayed superimposed on the peripheral image, and the guide route is displayed in a car-mounted navigation device.

Specifically, the navigation device disclosed in Patent Document 4 is provided with imaging means for capturing an image of a scene in the direction of advance, and display means for displaying an image captured by the imaging means; and when a branch point on a route detected by route detection means and a current position detected by current position detection means are equal to or less than a predetermined distance from each other, an image for guiding the user in a recommended direction of travel at the branch point is superimposed on the image captured by the imaging means and displayed in the display means.

In the navigation device disclosed in Patent Document 5, a guide information specifying unit is provided with a guide information specifying unit for specifying a position on a map for presenting guide information, and the type of guide information presented; an obstacle detection unit for detecting the position and type of obstacles (pedestrians, vehicles, and the like) around the vehicle in which the device is used through the use of object recognition or the like; a display position determination unit for calculating a position that does not coincide with an obstacle detected in a display position of the guide information; and an image output unit for outputting guide information in a determined position within the windshield view of the vehicle, or a determined position within the frontal image display region; and the direction of travel along the route is superimposed and displayed on the actual scene viewed from the vehicle.

Navigation systems for use by a walker also include the portable terminal device and navigation device disclosed in Patent Document 6 (Japanese Laid-open Patent Application No. 2005-241385) in which the route direction is superimposed and displayed on an image of the actual surroundings that is captured by a camera. In this portable terminal device, the screen of the digital camera is demarcated based on the current position of the user (destination guidance device), destination direction coordinates that correspond to the destination are determined for the screen, and an instructional display with respect to the destination direction coordinates is superimposed on the captured camera image on the screen on the basis of a predetermined reference point (the middle of the lower edge of the screen).

When an image of the peripheral scene is captured by a CCD camera or other imaging means provided to the portable terminal, and the peripheral image is to be displayed on the display screen of the portable terminal, it is necessary for the optical axis of the imaging means to be parallel to the horizontal direction, and for the image to be captured with the attitude of the portable terminal adjusted so that the display screen will be in a direction perpendicular to the horizontal direction. An example of a method for adjusting the attitude in an electro-optical viewing system of such description is disclosed on Patent Document 7 below (Japanese Patent No. 3700021).

In the electro-optical viewing system disclosed in Patent Document 7, a map image or another image prepared in advance by a computer system is captured along with an image of the actual scene. Undesired contrasting objects are removed from the image of the actual scene and replaced by the images prepared by the computer system. The system produces an enlarged image from the image of the actual scene and the image created by the computer; therefore, the attitude of the imaging means is adjusted so that the vertical and horizontal directions of the enlarged image directly correspond to the vertical and horizontal directions of the scene, and the normal to the plane of the image is oriented in the direction heading from the user toward the actual scene.
[Patent Document 1]: Japanese Laid-open Patent Application No. 2001-165681 (FIGS. 1 and 2)
[Patent Document 2]: Japanese Laid-open Patent Application No. 2001-27535 (FIGS. 1 and 4, paragraph [0054])
[Patent Document 3]: Japanese Laid-open Patent Application No. 2000-259861 (FIGS. 2 and 8)
[Patent Document 4]: Japanese Laid-open Patent Application No. 2004-257979 (FIG. 4)
[Patent Document 5]: Japanese Laid-open Patent Application No. 2006-162442 (FIGS. 4 and 5)
[Patent Document 6]: Japanese Laid-open Patent Application No. 2005-241385 (FIG. 9)
[Patent Document 7]: Japanese Patent No. 3700021 (FIG. 3, Claim 1)

### DISCLOSURE OF THE INVENTION

### [Problems the Invention Is Intended To Solve]

However, in cases where a mobile telephone equipped with a camera or another similar device is used as a navigation system terminal device, a peripheral image captured by the camera is displayed on display means, and the route and direction of advance are displayed on the peripheral image, there will be instances where the smallness of the display screen of the mobile telephone will cause the route intended to be displayed to not be displayed on the screen if the imaging direction is out of alignment. In order to overcome such problems, the inventor of the present application filed an application for an invention for a "navigation system, portable terminal device, and route guide method" in PCT/JP2006/320461 ("Prior Application 1" hereunder).

Specifically, the invention according to Prior Application 1 relates to a communication-type pedestrian navigation system for searching for a guidance route from a start point up to a destination, and using image information displayed on display means to provide guidance along the route. The invention relates in particular to a pedestrian navigation system for imaging a peripheral scene in intersections or other such locations; displaying the captured image on display means as a peripheral image; and, in a case where the route image cannot be displayed on the peripheral image when a route guide image or a guidance image in a direction of advance is to be displayed on top of the displayed peripheral image, for providing guidance along an imaged direction within which the route image can be displayed.

In the pedestrian navigation system of Prior Application 1, a mobile telephone equipped with imaging means is used as the terminal device. The system is configured so that, in a case where the user is to capture an image of the peripheral scene in an intersection or other such location, an optical axis of the camera is brought into alignment with the horizontal direction and the image is captured, as with the electro-optical viewing system disclosed in Patent Document 7 referenced above.

However, in cases where the user aligns the optical axis of the camera or other imaging means with the horizontal direction and takes a picture using a terminal device such as a mobile telephone, the optical axis of the camera will typically be in a parallel positional relationship with respect to the axis of the direction perpendicular to the display screen. Therefore, the display means of the mobile telephone will be oriented in a direction that is at a right angle with respect to the horizontal direction; i.e., the normal, which is the optical axis of the imaging means. A problem is presented in that such an attitude is not typically the direction in which the user views the display screen of the mobile telephone (instead of holding the display screen vertically, the user views it at a angle of 30 to 60° relative to the vertical direction), requiring the image to be captured in an position that is unnatural for the user.

If the user tries to circumvent this problem by holding the portable terminal device at a slant with respect to the horizontal direction instead of holding the display screen of the device vertically upright, the optical axis of the imaging means will be directed downward from the horizontal direction, and a further problem will be presented in that the horizontal direction of the captured peripheral image will not be oriented in the direction perpendicular to the display screen, an unnatural image will be displayed.

The inventor of the present application undertook a variety of investigations in order to overcome problems described above. As a result, the inventor perfected the invention after having hypothesized that these problems could be overcome with a navigation device comprising an optical system for displaying a captured image, wherein a direction of an optical axis of imaging means is substantially parallel to the normal to a display screen of display means and a live image (a peripheral image captured using the imaging means) is used, as long as a control is performed in regard to displaying the live image to be displayed on the display means such that a center of the optical axis of the imaging means is positioned below a center of the display screen, and the horizontal direction of the peripheral image is displayed on the display screen even if the direction of the optical axis of the imaging means is directed downward from a horizontal line.

Specifically, it is an object of the present invention to provide a pedestrian navigation system for using imaging means of a portable terminal device for imaging a peripheral scene in intersections or other such locations; displaying the captured image as a peripheral image on a display screen; and, in a case where the portable terminal device is held at an attitude suitable for the user to view the display screen when a route guide image is to be displayed on top of the displayed peripheral image, for displaying a horizontal direction of the peripheral image on the display means even if a direction of an optical axis of the imaging means is directed downward from a horizontal line.

### [Means for Solving the Abovementioned Problems]

In order to resolve the aforementioned problems, a first aspect of the invention of the present application is a navigation system comprising: a route search server provided with route search means for referencing network data for route searching, and searching a guide route from a departure point to a destination; and a portable terminal device having guidance information storage means for storing guide information that includes guide route data, GPS receiving means for determining a current position, imaging means, and display means for displaying a peripheral image captured by the imaging means and a guide route, or a guidance image in a direction of advance or an image showing a point of interest; the navigation system **characterized in that**:
the portable terminal device further has display control means for controlling a display of the peripheral image displayed on the display means; and
the display control means controls a position in which the peripheral image captured by the imaging means is displayed so that a center of an optical axis of the imaging means will be positioned lower than a center of a display screen, and displays a horizontal direction of the peripheral image on the display screen even if a direction of the optical axis of the imaging means is directed downward from a horizontal line.

According to the first aspect of the invention of the present application, it is preferred that in a case where the peripheral image is displayed, the display control means compares a pixel region of an imaging element that constitutes the imaging means with a normal pixel region for showing a map image on the display means, and sets a different pixel region, thereby controlling the position in which the peripheral image captured by the imaging means is displayed so that the center of the optical axis of the imaging means will be positioned lower than the center of the display screen, and displaying the horizontal direction of the peripheral image on the display screen even if the direction of the optical axis of the imaging means is directed downward from the horizontal line.

According to the first aspect of the invention of the present application, it is preferred for the imaging means further to have an imaging means shift mechanism; and, in a case where the peripheral image is displayed, for the imaging means to be shifted upward using the imaging means shift mechanism.

A second aspect of the invention of the present application is a portable terminal device connected via a network to a route search server provided with route search means for referencing network data for route searching, and searching a guide route from a departure point to a destination;
the portable terminal device characterized in comprising guidance information storage means for storing guide information that includes guide route data; GPS receiving means for determining a current position; imaging means; display means for displaying a peripheral image captured by the imaging means and a guide route, or a guidance image in a direction of advance or an image showing a point of interest; and display control means for controlling a display of the peripheral image displayed by the display means; wherein
the display control means controls a position in which the peripheral image captured by the imaging means is displayed so that a center of an optical axis of the imaging means will be positioned lower than a center of a display screen, and displays a horizontal direction of the peripheral image on the display screen even if a direction of the optical axis of the imaging means is directed downward from a horizontal line.

According to the second aspect of the invention of the present application, it is preferred that in a case where the peripheral image is displayed, the display control means compares a pixel region of an imaging element that constitutes the imaging means with a normal pixel region for showing a map image on the display means, and sets a different pixel region, thereby controlling the position in which the peripheral image captured by the imaging means is displayed so that the center of the optical axis of the imaging means will be positioned lower than the center of the display screen, and displaying the horizontal direction of the peripheral image on the display screen even if the direction of the optical axis of the imaging means is directed downward from the horizontal line.

According to the second aspect of the invention of the present application, it is preferred for the imaging means further to have an imaging means shift mechanism; and, in a case where the peripheral image is to be displayed, for the imaging means to be shifted upward using the imaging means shift mechanism.

A third aspect of the invention of the present application is a peripheral-image display method for using a navigation system comprising a route search server provided with route search means for referencing network data for route searching, and searching a guide route from a departure point to a destination; and a portable terminal device having guidance information storage means for storing guide information that includes guide route data, GPS receiving means for determining a current position, imaging means, and display means for displaying a peripheral image captured by the imaging means and a guide route, or a guidance image in a direction of advance or an image showing a point of interest; the peripheral-image display method characterized in comprising:
the portable terminal device further having display control means for controlling a display of the peripheral image displayed on the display means; and
the display control means having a display step for controlling a position in which the peripheral image captured by the imaging means is displayed so that a center of an optical axis of the imaging means will be positioned lower than a center of a display screen, and displaying a horizontal direction of the peripheral image on the display screen even if a direction of the optical axis of the imaging means is directed downward from a horizontal line.

According to the third aspect of the invention of the present application, it is preferred that in a case where the peripheral image is displayed in the display step, the display control means compares a pixel region of an imaging element that constitutes the imaging means with a normal pixel region for showing a map image on the display means, and sets a different pixel region, thereby controlling the position in which the peripheral image captured by the imaging means is displayed so that the center of the optical axis of the imaging means will be positioned lower than the center of the display screen, and displaying the horizontal direction of the peripheral image on the display screen even if the direction of the optical axis of the imaging means is directed downward from the horizontal line.

According to the third aspect of the invention of the present application, it is preferred for the imaging means further to have an imaging means shift mechanism; and, in a case where the peripheral image is to be displayed, for the imaging means to be shifted upward using the imaging means shift mechanism.

### [Effect of the Invention]

According to the first aspect of the invention of the present application, a peripheral scene in an intersection or another such location is imaged using imaging means of a portable terminal device; the captured image is displayed as a peripheral image on a display screen; and, in a case where the portable terminal device is held at an attitude that is suitable for the user to view the display screen when a route guide image, a guidance image in a direction of advance, an icon image indicating a point of interest, or another image is to be displayed on top of the displayed peripheral image, for displaying a horizontal direction of the peripheral image on the display means even if a direction of an optical axis of the imaging means is directed downward from a horizontal line.

According to the second aspect of the invention of the present application, it is possible to provide a portable terminal device constituting the navigation system according to the first aspect of the invention of the present application. According to the third aspect of the invention of the present application, it is possible to provide a peripheral image display method in which the navigation system according to the first aspect of the invention of the present application is used.

### BRIEF DESCRIPTION OF THE DRAWINGS

FIG. 1 is a block diagram showing the structure of the navigation system according to an embodiment of the present invention;
FIG. 2 is a schematic diagram showing the attitude of the portable terminal device and the optical axis and imaging angle of the imaging means;
FIG. 3 is a diagram showing an example of the display image in a case in which a peripheral image captured by the imaging means is displayed in the display means in an image guide mode;
FIG. 4 is a diagram showing an example of the display image in a case in which a guide route is present within the range of the peripheral image displayed on the display means, in a state where the portable terminal device is held so that the optical axis of the imaging means is oriented in the horizontal direction;
FIG. 5 is a schematic diagram showing a relationship between the attitude of the portable terminal device and the optical axes of the imaging means and the display screen of the display device.
FIG. 6 is a diagram of a display image showing the position of the peripheral image displayed on the display screen in a case where the peripheral image was captured with respect to the positional relationship illustrated in FIG. 5;
FIG. 7 is a schematic diagram showing a natural holding attitude and a line-of-sight direction when the display screen of the portable terminal device is being viewed;
FIG. 8 is a schematic diagram showing a relationship between the angle of view within which an image can be captured by the imaging means, and a position in which the peripheral image captured by the imaging means is displayed on the display screen of the display means;
FIG. 9 is a schematic diagram showing a relationship between the angle of view of the imaging means and a display region of the position in which the peripheral image is captured in an embodiment of the portable terminal device of the present invention, in a case where the optical axis of the imaging means is tilted downward from the horizontal direction;
FIG. 10 is a schematic diagram of a display region showing a region that is separate from the area in which the peripheral image is displayed in FIG. 9;
FIG. 11 is a schematic diagram showing a conceptual view of a display image shift achieved using a mechanism for preventing shaking of the imaging means;
FIG. 12 is a schematic diagram showing a conceptual view of road network data for route searching;
FIG. 13 is a schematic diagram showing a conceptual view of transportation network data for route searching using transportation facilities; and
FIG. 14 is a diagram showing the structure of the map data.

### [Key to Symbols]

- 10: navigation system
- 12: network
- 20: portable terminal device
- 201: control means
- 21: GPS receiving means
- 22: imaging means
- 23: attitude detection means
- 24: image layout means
- 25: display control means
- 26: communication means
- 27: guidance information storage means
- 28: display means
- 29: operation input means
- 30: route search server
- 301: control means
- 31: communication means
- 32: guidance information editing means
- 33: route search means
- 34: map database
- 35: database for route search network

### BEST MODE FOR CARRYING OUT THE INVENTION

Embodiments of the present invention will be described in detail below using embodiments and drawings. However, the embodiments described hereinafter are merely examples of the navigation system intended to specify the technical idea of the present invention, and are not intended to specify the present invention as a navigation system. The present invention has equivalent applicability to other embodiments of a navigation system included in the scope of the claims.

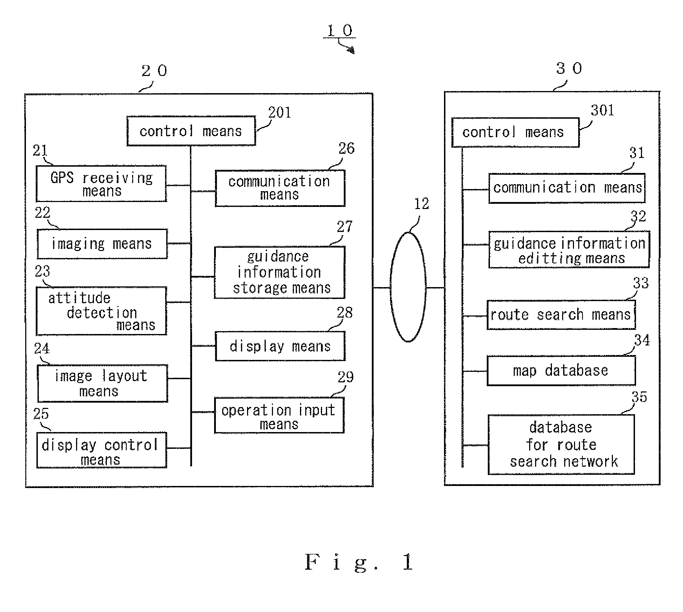

FIG. 1 is a block diagram showing the structure of the navigation system according to an embodiment of the present invention. The navigation system 10 is provided with a route search server 30 and a portable terminal device 20 that are connected via the Internet or another network 12, as shown in FIG. 1. The route search server 30 is provided with route search means 33, a map database 34 in which map data are accumulated, and a database for route search network 35 in which transportation network data are accumulated that are road network data or public transportation facility network data used for route searching.

The route search server 30 is also provided with a control means 301, communication means 31, and guidance information editing means 32. The control means 301 is a microprocessor having RAM, ROM, and a processor (not shown), and controls the operation of each component through the use of a control program stored in the ROM. The communication means 31 is an interface for communicating with the portable terminal device 20 via the network 12.

The route search server 30 references the database for route search network 35 and searches for a guide route that matches the route search conditions when there is a route search request including a current position, a destination, movement means (automobile, walking, a transportation facility, a combination of walking and a transportation facility, or the like) and other route search conditions from the portable terminal device 20. The guide route data obtained as a result of the route search are collected in guide information (data) for transmission to the portable terminal device 20 by the guidance information editing means 32, together with unit map data (map data divided into areas of predetermined size by latitude/longitude) of a predetermined range that include the current position of the portable terminal device 20 and are selected from the map database 34. The collected guide information is delivered to the portable terminal device 20.

The portable terminal device 20 is provided with control means 201, GPS receiving means 21, imaging means 22, attitude detection means 23, image layout means 24, image control means 25, communication means 26, guidance information storage means 27, display means 28, operation input means 29, and other components. The control means 201 is a microprocessor having RAM, ROM, and a processor (not shown), and controls the operation of each component through the use of a control program stored in the ROM. The communication means 26 is an interface for communicating with the route search server 30 via the network 12.

The operation input means 29 is operating/inputting means composed of number keys or alphabet keys, and other function keys, selection keys, scroll keys, and the like, and various input operations can be performed by operating a key or selecting a desired menu from a menu screen displayed in the display means 28 that is an output means. The display means 28 therefore also functions as a component of the operation input means 29.

When a user requests a route search from the route search server 30, the user operates the operation input means 29 of the portable terminal device 20, selects a route search from a service menu displayed in the display means 28, and inputs the current position, destination, movement means (automobile, walking, a transportation facility, a combination of walking and a transportation facility, or the like), and other route search conditions. The inputted route search conditions are collected in a delivery request to the route search server 30 and transmitted as a route search request to the route search server 30 via the communication means 26.

When the portable terminal device 20 receives guide information that is the result of the route search from the route search server 30, the portable terminal device 20 temporarily stores the guide information in the guidance information storage means 27. The map image and the image of the guide route, images of icons showing points of interest, and other images are usually displayed in the display means 28 with the current position of the portable terminal device 20 at the center on the basis of the guide information. A current position mark is displayed in the corresponding position on the map image. When the current position is near an intersection node or the like on the guide route, a forward direction guide image is displayed that indicates a forward direction such as a right turn, a left turn, or straight ahead at the intersection node. When the portable terminal device 20 is provided with a speaker or other output means, the portable terminal device 20 may be configured so as to provide voice guidance for indicating the forward direction or distance to the intersection node by voice guidance.

A map display such as described above occurs in the case of a normal guidance mode. The navigation system 10 is further provided with an image guide mode in which a peripheral image is captured by the imaging means 22, the peripheral image is displayed in the display means 28 along with a guide route image or a guidance image in the direction of advance, and guidance is provided. This image guide mode will be referred to hereinafter as live image mode. The switch to live image mode is preferably made by the attitude detection means 23 detecting the attitude of the portable terminal device 20 as described hereinafter, and automatically switching to the live view mode when a predetermined state occurs. As shall be apparent, the user may also switch the mode through the use of the operation input means 29.

In the portable terminal device 20, the focal length (zoom) of the imaging means 22 (CCD camera, for example) and the screen size of the display means 28 are fixed at predetermined set values. The GPS receiving means 21 measures the current position of the portable terminal device 20 at prescribed time intervals, and it is therefore possible to specify the position at which the imaging means 22 is operated and the peripheral image captured. The measurements by the GPS receiving means 21 are made every 1 to 5 seconds, for example, when the mobile telephone is the portable terminal device 20.

When the user holds the portable terminal device 20 out forward, the attitude detection means 23 detects when the optical axis of the imaging means 22 is within a predetermined angle from horizontal, and the shutter of the imaging means 22 automatically operates to capture a peripheral image (still image) in the direction of the optical axis. Since the attitude detection means 23 is composed of a bearing sensor and a tilt sensor, the orientation (bearing) of the optical axis can be obtained from the bearing sensor output, and the angle formed by the optical axis and the horizontal direction can be obtained from the tilt sensor output. The orientation of the optical axis and the tilt angle are stored together with the peripheral image captured by the imaging means 22. The imaging angle of the imaging means 22 is generally tilted to a certain degree, and a captured peripheral moving image is captured so that the portions outside the display range also include an adequately wide range.

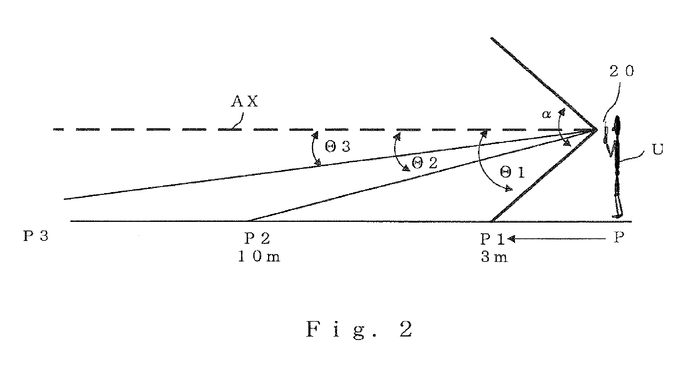

FIG. 2 is a schematic view showing the attitude, optical axis, and imaging angle of the imaging means 22. When a user U holds the portable terminal device 20 out forward in order to capture a peripheral image at a certain position P, the attitude detection means 23 detects the angle between the horizontal direction and the optical axis AX of the imaging means 22, and when the angle is within a predetermined angle range, the shutter is automatically operated to capture a forward image. The imaging angle of the vertical direction with respect to the optical axis AX at this time is α.

Since the imaging means 22 captures the peripheral image at a predetermined focal length, the points P1, P2, and P3 in front of the imaging point P can each be computed from the angles Θ1, Θ2, and Θ3 with the optical axis AX, and it is possible to use the abovementioned angles to geometrically compute in meters how far a position in the display image is in front of the imaging position. Specifically, the point P1 in FIG. 2 is 3 m forward from the imaging point P, and is at the angle Θ1 from the optical axis. The point P2 is 10 m forward from the imaging point P, and is at the angle Θ2 from the optical axis. The point P3 (not shown) is 30 m forward from the imaging point P, and is at the angle Θ3 from the optical axis.

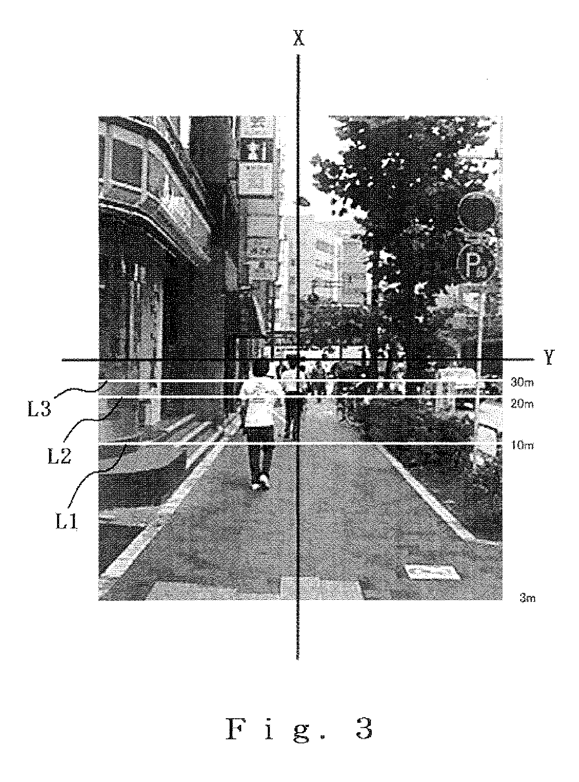

FIG. 3 is a diagram showing an example of the display screen in a case in which the peripheral image thus captured by the imaging means 22 is displayed in the display means 28. The peripheral image is displayed so that the center (intersection of lines X and Y in FIG. 3) of the display screen coincides with the optical axis AX and is in the horizontal direction. As described with reference to FIG. 2, an image showing (3 m ahead) for the point P1 forward from the imaging point P is at the bottom of the display image at the angle Θ1 with the optical axis. An image showing (10 m ahead) for the point P2 is at the position of a line L1 shown in the display image at the angle Θ2 with the optical axis. In the same manner, a point 20 m ahead is at the position of the line L2, and a point 30 m ahead is at the position of the line L3.

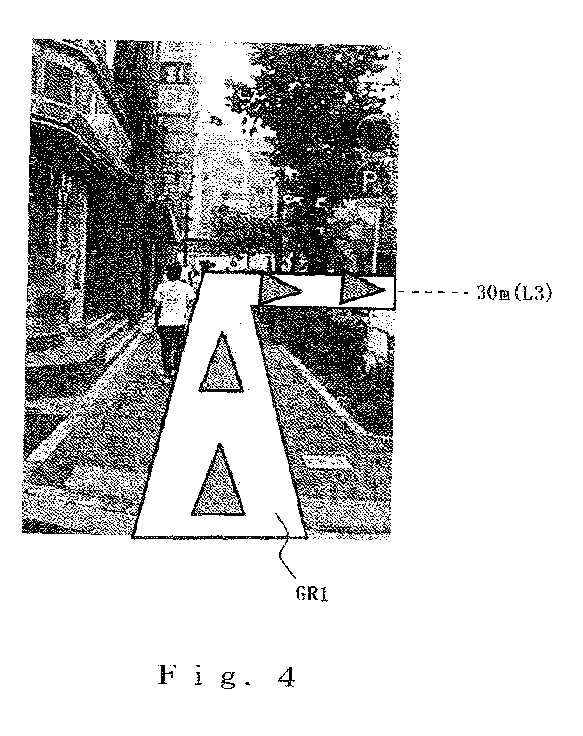

It is thereby possible to determine the display position and the position of the display image in which to display the guide route image by how far in meters the guide route is from the imaging point, and to provide route guidance in an image that is always stable, and the computational processing for determining the display position is simplified. Specifically, the position and direction of the guide route are calculated based on the position information (current position at the time of imaging) at the time the peripheral image is captured; i.e., the time the still image is acquired, and the guide route is drawn in a predetermined position on the display image with respect to the direction of the optical axis AX. FIG. 4 is a diagram showing an example of the display image, in which the optical axis AX and the forward direction of the guide route are the same, the guide route is present within the range of the peripheral image displayed on the screen, and a guide route image GRI for a right turn 30 m ahead of the imaging point is superimposed and drawn on the peripheral image. The image layout means 24 performs the calculation described above on the basis of the detection output of the attitude detection means 23 and determines the display position of the guide route image GRI.

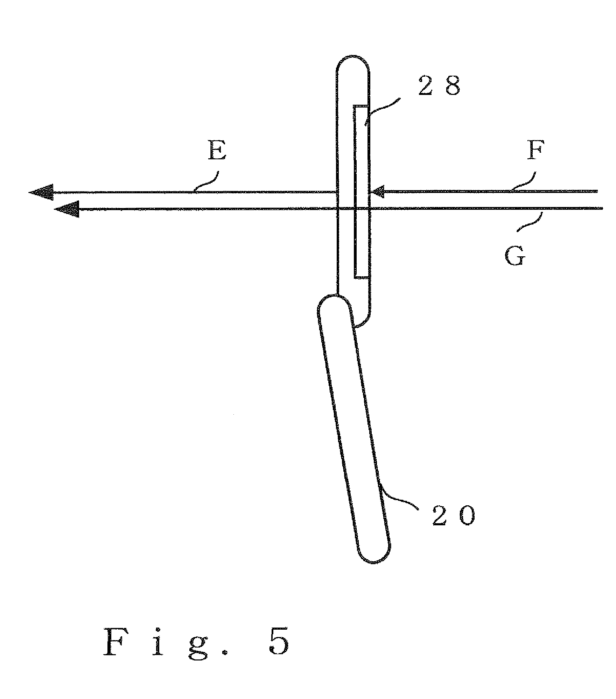

However, in such cases, the peripheral image in the direction of advance may be captured by the imaging means 22 in a state wherein the portable terminal device 20 is held with the optical axis oriented horizontally. Specifically, the image is captured with the portable terminal device 20 held so that the normal to the display screen of the display means 28 of the portable terminal device 20 (arrow F) will be in alignment with the direction of the optical axis of the imaging means 22 (arrow E) and the line-of-sight direction of the user (arrow G), as shown in the schematic diagram of FIG. 5. In other words, the peripheral image is captured in such a manner that the imaging means 22 comes into alignment with the position of the eye of the user at an attitude such that the display screen of the portable terminal device 20 is vertical (an attitude such that the optical axis is horizontal).

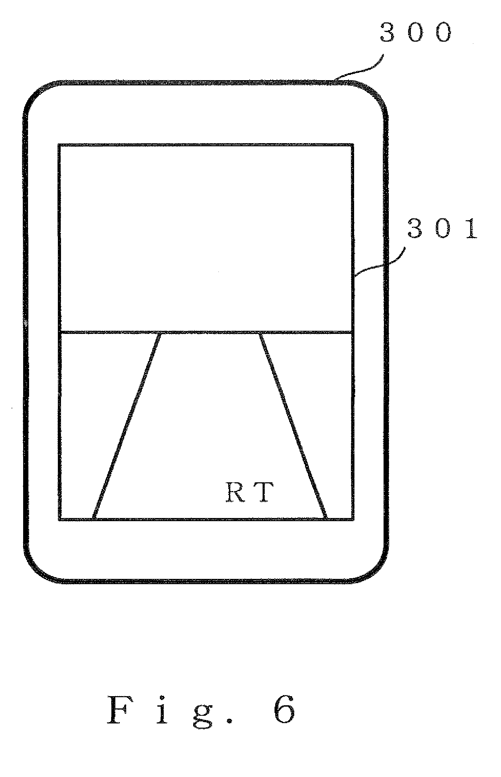

With such a configuration, the horizontal direction of the peripheral image displayed on the display screen of the display means 28 will be in alignment with the line-of-sight direction; and, as shown in FIG. 6, the peripheral image 301 actually being viewed in the center of the display screen 300 will be displayed, while if the guide route direction has been imaged, the guide route RT will be displayed as a superimposed image on the peripheral image 301. The overlaying of the image is controlled in accordance with a peripheral image position and a guide route position computed by the image layout means 24.

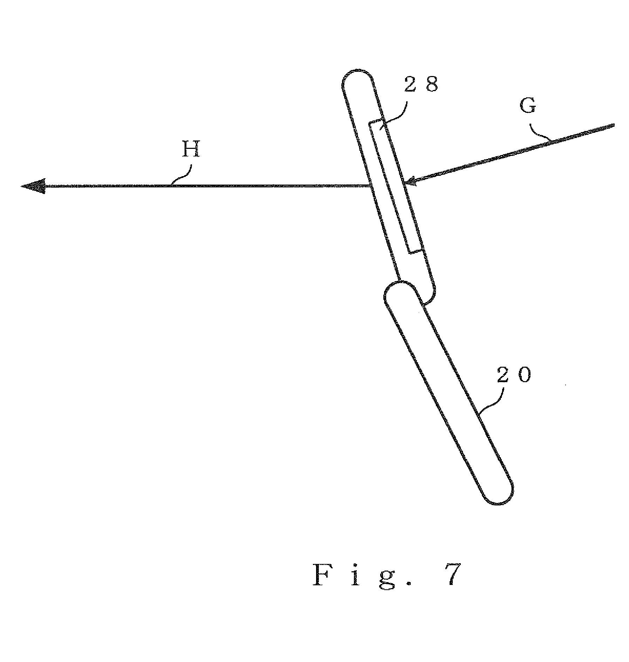

However, holding the portable terminal device 20 at such an attitude is unnatural for the user. Typically, in a case where the user views the screen of the portable terminal device 20, it is natural for the portable terminal device 20 to be held at an attitude at which the line-of-sight direction (arrow G) is tilted at an angle of 30 to 60° downward from the horizontal direction for the screen of the display means 28 to be viewed, as shown in FIG. 7. For example, the user will not hold the portable terminal device 20 vertically when receiving navigational guidance. Holding the portable terminal device 20 upright can cause hand fatigue, while if the portable terminal device 20 is held directly in front of the eyes, the real view will be obstructed regardless of how much of the peripheral scene is reproduced (displayed) on the screen. This tends to make walking difficult.

However, if the portable terminal device 20 is held at the attitude shown in FIG. 7, the optical axis of the imaging means 22 (arrow G in FIG. 7) will not be aligned with the horizontal direction (arrow H); therefore, the peripheral image displayed on the display screen of the display means 28 will not be aligned with the horizontal and will be displayed as an unnatural image. Since the imaging means 22 is essentially a camera, an image will not be readily captured if the optical axis of the imaging lens is not substantially parallel with the normal to the display screen. Accordingly, since the camera is used mainly for capturing peripheral images, it has been typically implicit in the past to regard the optical axis of the lens and the normal to the display screen as being parallel to one another, as with the system illustrated in Patent Document 7. This attitude is referred to hereunder as "live-image navigation according to the prior art," whereas holding the portable terminal device at the attitude according to the present invention (a state where the portable terminal device 20 is tilted) is referred to as "live-image navigation according to the invention."

The present invention is configured so that the display control means 25 is capable of controlling the position in which the peripheral image captured by the imaging means 22 is displayed on the display screen so that the center of the optical axis of the captured image will be positioned below the center of the display screen, and is capable of displaying the horizontal direction of the peripheral image on the display screen of the display means 28 even if the direction of the optical axis of the imaging means is directed downward from a horizontal line.

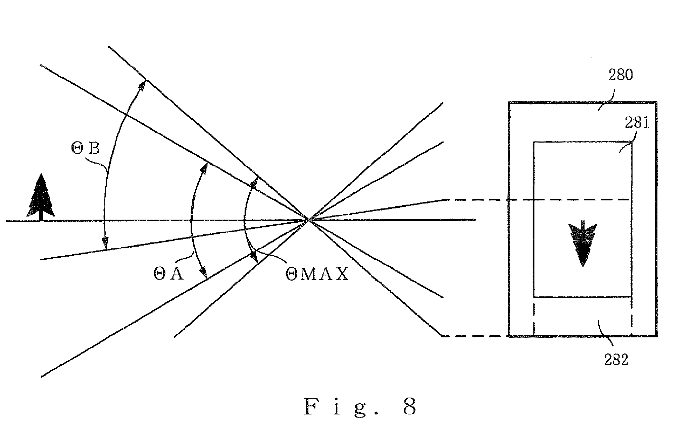

FIG. 8 is a schematic diagram showing the relationship between the angle of view within which an image can be captured by the imaging means 22, and a position in which the peripheral image captured by the imaging means 22 is displayed on the display screen of the display means 28. By way of example, a description shall now be given of the relationship between the optical axis and the displayed image, wherein a mobile telephone is used as the portable terminal device 20, and the camera unit installed in the mobile telephone is used as the imaging means 22. The imaging means 22, which is a CCD camera or the like, is provided to the portable terminal device 20; and the maximum active pixel area of the display screen is determined according to the pixel area of the imaging means 22 (e.g., 1600 x 1200 dots). The image circle of the imaging lens is ordinarily larger than the maximum active pixel area; therefore, image data is obtained in any regions where there are active pixels. It is typical for the optical axis of the imaging lens to be located in the center of the maximum active pixel area.

FIG. 8 shows a maximum angle of view ΘMAX obtained when the entire maximum active pixel area of the imaging means is used. The camera in the mobile telephone also has a zoom function; therefore, when the entire maximum active pixel area is used, the image will be at the wide angle end of the zoom. When live-image navigation according to the prior art is used, the image is too wide at the wide-angle end (distant images will be too small); therefore, the region of a conventional navigation screen 281, in which the pixels are concentrated to a certain degree, is used. It shall be apparent that the angle of view imaged by the imaging means 22 is also correspondingly smaller, as shown by ΘA, and is kept as the standard angle of view in navigation according to the prior art.

By contrast, with live-image navigation according to the present invention, the image will be shifted toward and displayed on the lower side of the display screen if the display region of the conventional live-image navigation screen 281 is set to a pixel region 282 upwardly shifted on the photographic-subject side; i.e., if the angle of view in live-image navigation according to the present invention is set to ΘB (the image is upside-down in the imaging means shown in FIG. 8; therefore, the region 282 towards the bottom in FIG. 8 is the screen of live-image navigation according to the present invention). At this time, the optical axis of the imaging means 22 is in a direction tilted downward from the horizontal line.

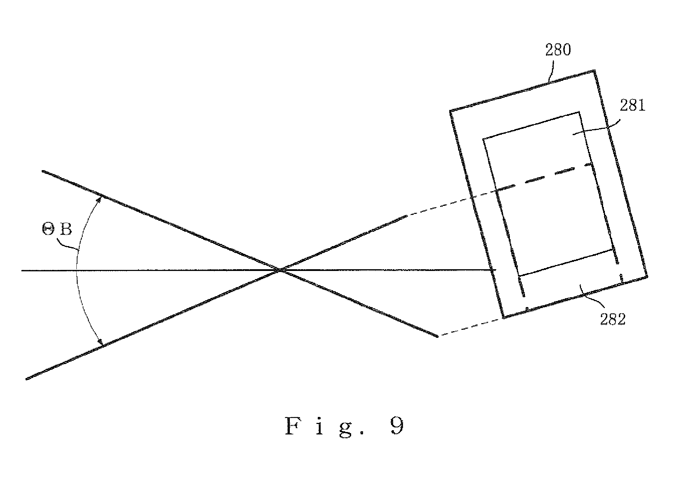

Specifically, if the region 282 of the screen used for live-image navigation according to the present invention is displayed on the screen, a geometric configuration such as the one shown in FIG. 9 will be established. In FIG. 9, the angle of view ΘB is the angle of view shifted according to the present invention. As long as the peripheral image captured according to the angle of view ΘB is displayed by the display control means 25 in the display position of the display region 282, the optical axis of the imaging means 22 can be directed downward with respect to the horizontal direction; i.e., the portable terminal device 20 can be held to a degree of tilt that is commensurate with the shift of the screen, when the horizontal direction is viewed as shown in FIG. 7 (along arrow H). This enables the portable terminal device 20 to be tilted and held in a lower position than achievable with live-image navigation according to the prior art, and enables the line of sight (arrow G in FIG. 7) to be lowered.

The display as described above is controlled by the display control means 25 as described with reference to FIGS. 8 and 9. For example, in a case where the peripheral image is to be displayed, the display control means 25 compares the pixel region of the imaging element that constitutes the imaging means with the normal pixel region 281 for showing a map image on the display means 28, and sets a different pixel region; i.e., the pixel region 282, which is shifted downward on the display screen. The display control means 25 thereby controls the display position of the peripheral image captured by the imaging means so that the center of the optical axis of the imaging means 22 will be positioned lower than the center of the display screen. It will be possible to display the horizontal direction of the peripheral image on the display screen even if the optical axis of the imaging means 22 is directed downward from the horizontal line.

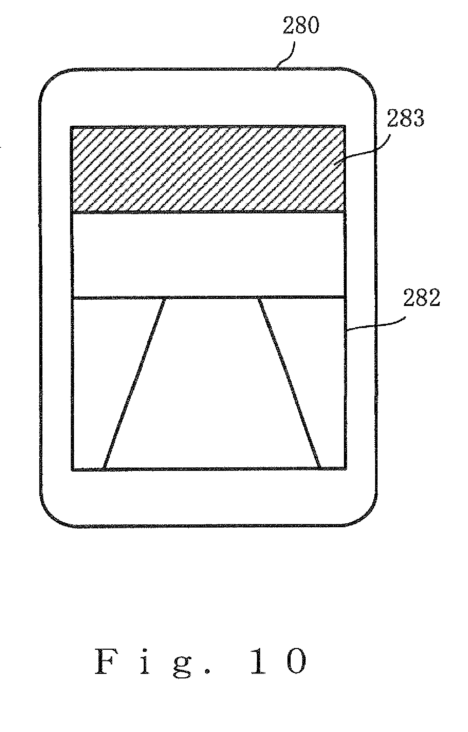

If the display is controlled as described above, then even if the portable terminal device is held with the display screen tilted with respect to the vertical direction, it will be possible to image and display photographic subjects in front of the user without having to orient the normal to the display screen in the direction of the photographic subject, as with the system according to Patent Document 7. If there is not enough space in the active pixel region 280 in a case where the degree of shift is increased to allow for an adequate degree of tilt, then a shaded region 283 in which no pixels are present can be employed as a region for displaying a variety of markings or selection button images for aiding navigation, as shown in FIG. 10.

In the present invention, the physical optical axis is not positioned in the center of the imaging lens, and the captured image is oriented more toward the periphery; therefore, in a strict sense, the captured peripheral image will be distorted. However, the degree to which the angle of view is tilted is known in advance for the distortion as well; therefore, it will be possible for the display control means 25 to display the peripheral image (live image) superimposed with information relating to the point of guidance (guide route information) present along the direction of the peripheral image.

For the aforedescribed embodiment, a description has been provided of an example in live-image mode, wherein a peripheral image is captured and displayed along with the guide route. The display control means 25 shifts the display region, and displays the peripheral image in a display region that is different from the display region in a common navigation system. It is thus possible to tilt the portable terminal device 20 and capture an image in the foreground even if the line-of-sight direction is directed downward.

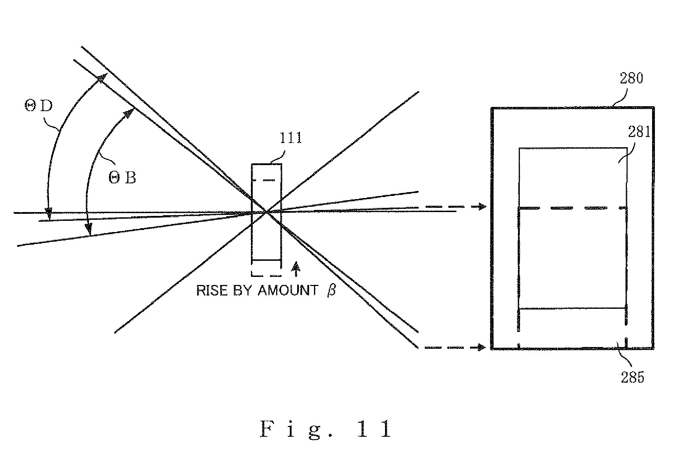

However, certain cameras may be equipped with an anti-vibration optical system in order to prevent the terminal device from moving (shaking due to hand motion) when images are captured. In such cases, it is possible to use the anti-vibration optical system (in most instances an anti-vibration mechanism is provided to the imaging lens) to forcibly shift the camera position upward by an amount β in the live-image navigation mode of the present invention so as to shift the captured image. Specifically, shifting (raising) an imaging lens 111 upward as shown in FIG. 11 will produce the same effect as if the captured image has been shifted on the imaging element, as with the lower region 285.

However, the amount of shift β performed by the anti-vibration optical system is typically small; therefore, this method alone is insufficient for achieving the effect. It is possible to incorporate the imaging element region shift in the above-described embodiment (see FIG. 8), and enhance the effect. Movement of the anti-vibration optical system is not cited by way of limitation; an optical system provided with a tilting mechanism may also be used.

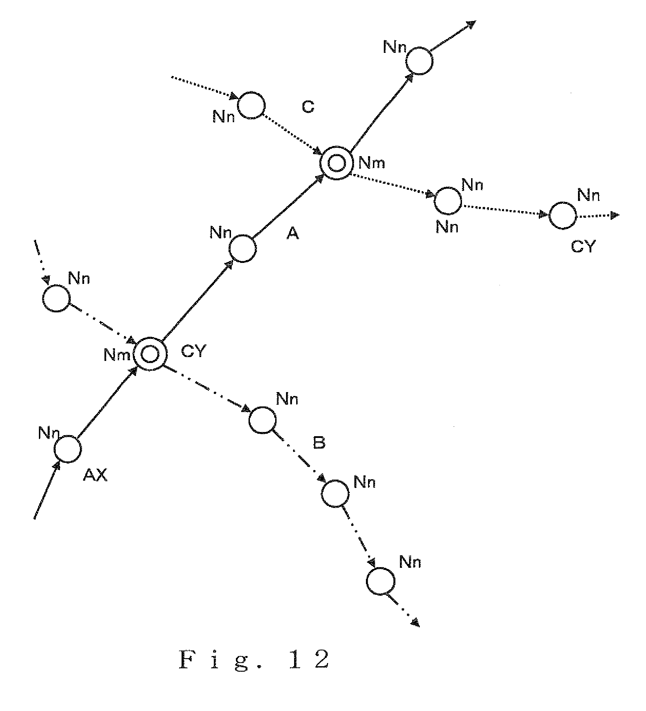

A route search in the route search server 30 will next be described. The database for route search network 35 is provided with road network data and transportation network data. These network data are configured as described below. For example, when the roads are composed of roads A, B, and C as shown in FIG. 12, the end points, intersection points, turning points, and other points of roads A, B, and C are designated as nodes; roads linking the nodes are indicated by directional links; and the network data are composed of node data (node latitude/longitude), link data (link numbers), and link cost data in which link costs (distance between links or time required to travel to a link) between links are in the form of data.

Specifically, in FIG. 12, the reference symbols Nn and Nm indicate nodes, wherein Nm indicates an intersection of roads. Directional links between nodes are indicated by arrow lines (solid lines, dashed lines, chain double-dashed lines). Links in the upstream and downstream directions of the roads are present, but only links in the direction of the arrows are shown in FIG. 12 to simplify the diagram.

When the data of such a road network is route-searched as a database for route searching, a link connected from the node of the departure point to the node of the destination point is traced, the link cost is accumulated, and the route having the smallest accumulated link cost is searched and used for guidance. Specifically, when a route search is performed using node AX in FIG. 12 as the departure point and node CY as the destination point, the link to node CY is traced in which road A is traveled from node AX, and a right turn into road C is made at the second intersection point, then the link cost is accumulated and the route having the smallest accumulated value for the link cost is searched and used for guidance.

Other routes from node AX to node CY are not shown in FIG. 12. However, other routes actually exist, and routes whereby it is possible to reach node CY from node AX are therefore searched in the same manner, and the route having the smallest link cost among the searched routes is determined to be the optimum route. This technique is in accordance with the publicly known technique known as Dijkstra's method, for example.

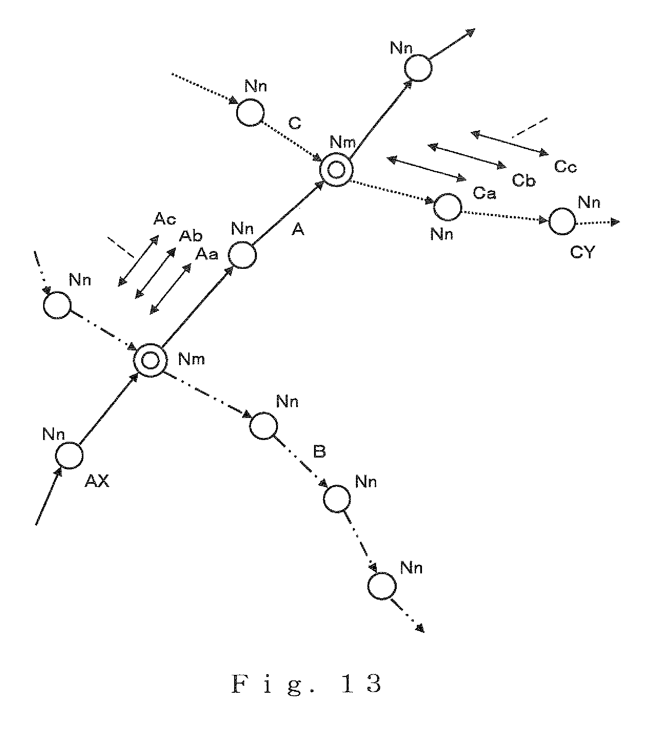

In contrast, transportation network data for a route search of transportation facilities are configured as described below. For example, when the transportation network data are composed of transportation lines A, B, and C as shown in FIG. 13, for example, train stations (airports in the case of an airplane route) provided to the transportation lines A, B, and C are designated as nodes, intervals linking the nodes are indicated by directional links, and node data (node latitude/longitude) and link data (link numbers) form the network data. In FIG. 13, the reference symbols Nn and Nm indicate nodes, wherein Nm indicates a connection point (train-changing station or the like) between transportation routes, and directional links between nodes are indicated by arrow lines (solid lines, dashed lines, chain double-dashed lines). Links in the upstream and downstream directions of the roads are present, but only links in the direction of the arrows are shown in FIG. 13 to simplify the diagram.

However, the link costs in a transportation network are fundamentally different from those of a road network. Specifically, the link costs in the road network are fixed and static, whereas the transportation network has a plurality of trains or aircraft (trains, aircraft, and other routes are referred to hereinafter as modes of transportation) moving through the transportation lines, as shown in FIG. 13. In a transportation network of such description, the times of departure from the nodes of each means of transportation are specific, as are the times of arrival at the subsequent nodes (specified in the timetable data and traffic data). There are also cases in which the routes do not necessarily link to adjacent nodes. This situation occurs in the case of express trains and local trains, for example. In such a case, a plurality of different links exists on the same transportation line, and the time required to travel between nodes may change according to the mode of transportation.

The example of the transportation network shown in FIG. 13 includes a plurality of transportation means (routes) Aa through Ac in the same link of a transportation line A, and a plurality of transportation means (routes) Ca through Cc in a transportation line C. Accordingly, the travel network of a transportation facility differs from a simple road network; the amount of data relating to nodes, links, and link costs therein is proportional to the sum total of the transportation means (routes of individual aircraft, trains, and the like). The amount of transportation network data is therefore extremely large in comparison to the amount of road network data. A correspondingly large amount of time is therefore needed to perform a route search.

All transportation means that can be used (ridden) to travel from a departure point to a destination point must be searched, and a transportation means that satisfies the search conditions must be specified in order to search the route from a certain departure point to a certain destination point using the type of transportation network data described above.

For example, in FIG. 13, when a route search is performed in which the departure point is node AX of transportation line A, a certain departure time is specified, and the destination point is node CY of transportation line C, all the transportation means subsequent to the departure time among the transportation means Aa through Ac traveling on transportation line A are selected as sequential departure time routes. Among the transportation means Ca through Cc traveling on transportation line C, the combination of all transportation means subsequent to the time at which boarding is possible in a connecting node is searched on the basis of the time of arrival at the connecting node to transportation line C; the time required for each route, the number of transfer connections, and other information is added together; and guidance is provided.

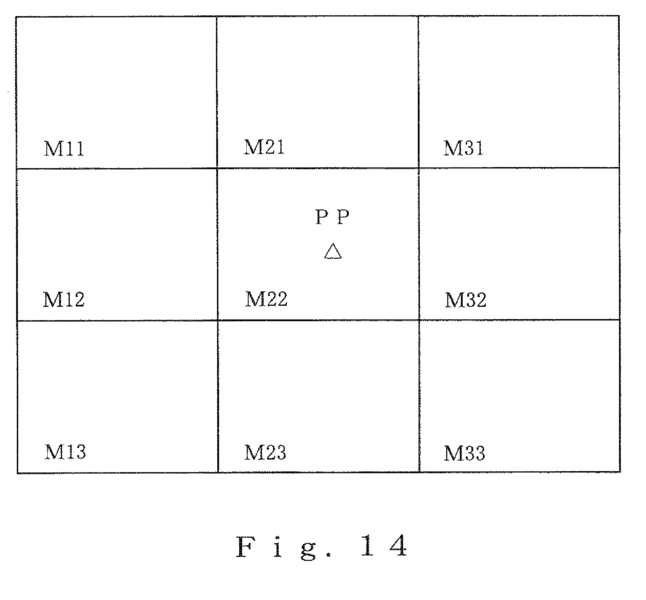

A guide route searched with reference to such network data is delivered to the portable terminal device 20 along with vector map data. The map data accumulated in the map database 34 is composed of unit map data that are divided into predetermined latitude/longitude ranges, as shown in FIG. 14. The map data are divided into map areas by predetermined latitude/longitude units, as shown in FIG. 14, and form a matrix of unit map data M11 through M33. When the data are delivered to the portable terminal device 20, the unit map data M22 that includes the current position PP of the portable terminal device 20 is at the center, and a total of nine unit maps made up of unit map data M21, M23, M12, M32, M11, M13, M31, and M33 are delivered that are adjacent to the unit map data M22 in the vertical, horizontal, and diagonal directions.

When the portable terminal device 20 moves and there are insufficient map data, the movement direction of the portable terminal device 20 is determined, and the route search server 30 delivers the needed portion of unit map data. The same procedure applies when the portable terminal device 20 requests delivery of map data for a specific point or position of a POI (Point of Interest). The guide route data are delivered together with the vector map data to the portable terminal device 20. The portable terminal device 20 thus receives the map data and guide route data from the route search server 30 and displays the map and the guide route in the display means 28.

As has been described in detail in the foregoing, according to the present invention there can be provided a pedestrian navigation system for imaging a peripheral scene in intersections or other such locations using imaging means of a portable terminal device; for displaying the captured image on display means as a peripheral image; and, in a case where the portable terminal device is held at an attitude that is suitable for the user to view the display screen when a route guide image, a guidance image in a direction of advance, an icon image indicating a point of interest, or another image is to be displayed on top of the displayed peripheral image, for displaying a horizontal direction of the peripheral image on the display means even if a direction of an optical axis of the imaging means is directed downward from a horizontal line.

### INDUSTRIAL APPLICABILITY

The portable terminal device used in the present invention is not limited to mobile telephones; it may be used with imaging lenses and display screens of a digital camera. Digital cameras take large-capacity memory cards, and are accordingly able to have maps stored therein. A digital camera incorporating a GPS unit camera can also be used as a portable terminal device for use in navigation. Such portable terminal devices offer a high degree of convenience for those who travel. The portable terminal device need not be held in front of the face, but can be held lower down, which makes the display screen easier to see and allows the user to receive the route guides in the navigation system.

## Claims

1. A navigation system comprising: a route search server provided with route search means for referencing network data for route searching, and searching a guide route from a departure point to a destination; and a portable terminal device having guidance information storage means for storing guide information that includes guide route data, GPS receiving means for determining a current position, imaging means, and display means for displaying a peripheral image captured by said imaging means and a guide route, or a guidance image in a direction of advance or an image showing a point of interest; said navigation system **characterized in that**:
said portable terminal device further has display control means for controlling a display of the peripheral image displayed on the display means; and
said display control means controls a position in which the peripheral image captured by said imaging means is displayed so that a center of an optical axis of said imaging means will be positioned lower than a center of a display screen, and displays a horizontal direction of the peripheral image on the display screen even if a direction of the optical axis of said imaging means is directed downward from a horizontal line.

2. The navigation system of Claim 1, **characterized in that** in a case where said peripheral image is displayed, said display control means compares a pixel region of an imaging element that constitutes said imaging means with a normal pixel region for showing a map image on said display means, and sets a different pixel region, thereby controlling the position in which the peripheral image captured by said imaging means is displayed so that the center of the optical axis of said imaging means will be positioned lower than the center of the display screen, and displaying the horizontal direction of the peripheral image on the display screen even if the direction of the optical axis of said imaging means is directed downward from the horizontal line.

3. The navigation system of Claim 1 or 2, **characterized in that** said imaging means further has an imaging means shift mechanism; and, in a case where said peripheral image is displayed, the imaging means is shifted upward using said imaging means shift mechanism.

4. A portable terminal device connected via a network to a route search server provided with route search means for referencing network data for route searching, and searching a guide route from a departure point to a destination;
said portable terminal device **characterized in** comprising guidance information storage means for storing guide information that includes guide route data; GPS receiving means for determining a current position; imaging means; display means for displaying a peripheral image captured by said imaging means and a guide route, or a guidance image in a direction of advance or an image showing a point of interest; and display control means for controlling a display of the peripheral image displayed by said display means; wherein
said display control means controls a position in which the peripheral image captured by said imaging means is displayed so that a center of an optical axis of said imaging means will be positioned lower than a center of a display screen, and displays a horizontal direction of the peripheral image on the display screen even if a direction of the optical axis of said imaging means is directed downward from a horizontal line.

5. The portable terminal device of Claim 4, **characterized in that** in a case where said peripheral image is displayed, said display control means compares a pixel region of an imaging element that constitutes said imaging means with a normal pixel region for showing a map image on said display means, and sets a different pixel region, thereby controlling the position in which the peripheral image captured by said imaging means is displayed so that the center of the optical axis of said imaging means will be positioned lower than the center of the display screen, and displaying the horizontal direction of the peripheral image on the display screen even if the direction of the optical axis of said imaging means is directed downward from the horizontal line.

6. The portable terminal device of Claim 4 or 5, **characterized in that** said imaging means further has an imaging means shift mechanism; and, in a case where said peripheral image is to be displayed, the imaging means is shifted upward using said imaging means shift mechanism.

7. A peripheral-image display method for using a navigation system comprising a route search server provided with route search means for referencing network data for route searching, and searching a guide route from a departure point to a destination; and a portable terminal device having guidance information storage means for storing guide information that includes guide route data, GPS receiving means for determining a current position, imaging means, and display means for displaying a peripheral image captured by said imaging means and a guide route, or a guidance image in a direction of advance or an image showing a point of interest; said peripheral-image display method **characterized in** comprising:
said portable terminal device further having display control means for controlling a display of the peripheral image displayed on the display means; and
said display control means having a display step for controlling a position in which the peripheral image captured by said imaging means is displayed so that a center of an optical axis of said imaging means will be positioned lower than a center of a display screen, and displaying a horizontal direction of the peripheral image on the display screen even if a direction of the optical axis of said imaging means is directed downward from a horizontal line.

8. The peripheral-image display method of Claim 7, **characterized in that** in a case where said peripheral image is displayed in said display step, said display control means compares a pixel region of an imaging element that constitutes said imaging means with a normal pixel region for showing a map image on said display means, and sets a different pixel region, thereby controlling the position in which the peripheral image captured by said imaging means is displayed so that the center of the optical axis of said imaging means will be positioned lower than the center of the display screen, and displaying the horizontal direction of the peripheral image on the display screen even if the direction of the optical axis of said imaging means is directed downward from the horizontal line.

9. The portable terminal device of Claim 7 or 8, **characterized in that** said imaging means further has an imaging means shift mechanism; and, in a case where said peripheral image is to be displayed, the imaging means is shifted upward using said imaging means shift mechanism.
